# EUROPÄISCHE PATENTSCHRIFT

(11) **EP 1 479 296 B1**
(45) Veröffentlichungstag und Bekanntmachung des Hinweises auf die Patenterteilung: **20.07.2011**
(21) Anmeldenummer: 04450016.3
(22) Anmeldetag: 22.01.2004
(51) Int. Cl.: A21B 1/48, A21B 2/00, A21C 15/02

(54) **Vorrichtung zur Wärmebehandlung von Nahrungsmitteln bzw. von Futtermitteln insbesondere zum Backen von Teigen und Anlage zur Herstellung von aus gebackenem Gut hergestellten Produkten**
Apparatus for heat treatment of food products or fodder, in particular for baking doughs, and plant for manufacturing products made out of baked material.
Dispositif pour le traitement thermique de produits alimentaires ou de fourrage, notamment pour cuire des pâtes, et installation pour la fabrication de produits préparés à base de matériau cuit

(30) Priorität: 22.05.2003 AT 7932003
(43) Veröffentlichungstag der Anmeldung: 24.11.2004
(73) Patentinhaber: Masterfoods Austria OHG, 7091 Breitenbrun (AT)
(72) Erfinder: Fila, Rudolf, 2344 Maria Enzersdorf (AT); Roeckel, Joseph, 67670 Wittersheim (FR); Moppett, Garry Dean, Windsor, Berks SL43 RG (GB); Trojer, Stefan, 8010 Graz (AT)
(74) Vertreter: Marlow, Nicholas Simon

(56) Entgegenhaltungen:
- WO-A-00/23650
- WO-A-95/03713
- WO-A-97/45686
- FR-A- 2 032 577
- GB-A- 941 334
- US-A- 2 301 589
- US-A- 3 115 104
- US-A- 3 187 152
- US-A- 3 883 386
- US-A- 3 901 137
- US-A- 4 116 118
- US-A- 4 565 704
- US-A- 4 655 125
- US-A- 4 795 652
- US-A- 4 987 828
- US-A1- 2001 012 528

## Beschreibung

Die gegenständliche Erfindung betrifft eine Anlage zur Herstellung von aus gebackenem Gut hergestellten Produkten,

wobei eine Vorrichtung zur Wärmebehandlung von Nahrungsmitteln bzw. von Futtermitteln, insbesondere zur Herstellung von Backwaren vorgesehen ist, mit einer kontinuierlich bewegten Fördereinrichtung, mindestens einer der Fördereinrichtung zugeordneten Heizeinrichtung, einer Einrichtung zum Aufbringen des Gutes auf die Fördereinrichtung und einer Einrichtung zum Abnehmen des durch wärme behandelten Gutes von der Fördereinrichtung.

Eine bekannte Vorrichtung zur Erzeugung von Backwaren besteht aus einer aus Metall hergestellten Trommel, welche kontinuierlich verdreht wird und welche mittels einer Induktionshelzung erhitzt wird, wobei auf deren Außenseite oder deren Innenseite mittels einer Auftrageinrichtung ein Teig aufgebracht wird. Durch die Beheizung der Trommel wird der auf der Trommel befindliche Teig gebacken. In der Folge wird das gebackene Gut von der Trommel abgenommen und wird der Weiterverarbeitung zugeführt. Da das gebackene Gut in heißem Zustand verformbar ist, kann es z.B. zu Rollchen verformt werden, welche In weiterer Folge mit einer Creme verfüllt werden.

Diese bekannte Vorrichtung entspricht jedoch in mehrfacher Hinsicht nicht den bestehenden Erfordernissen.

Da der Teig auf eine sich In Drehung befindliche Trommel aufgebracht wird, ist die maximale Dicke des gebackenen Teiges deshalb mit etwa 1,2 mm begrenzt, da für Produkte, welche eine größere Dicke aufweisen, von der beheizten Trommel auf diese Produkte nicht die erforderliche Hitze aufgebracht wird. Demgegenüber besteht jedoch das Bestreben, Backwaren mit wesentlich größeren Dicken herstellen zu können, um hieraus unterschledlichste Produkte erzeugen zu könne.

Da zudem die Trommel, welche aus Stahl hergestellt ist, einen maximalen Durchmesser von etwa 2,2 m und eine Breite von etwa 500 mm aufweist, muss sie zur Erzielung der erforderlichen mechanischen Stabilität eine Wandstärke von etwa 25 mm bis 30 mm aufweisen. Für die Beheizung der Trommel ist an einer einzigen Stelle derselben ein Induktionsheizgerät vorgesehen, welches die Trommel umschließt und durch welches die gesamte Trommel auf eine Temperatur von etwa 180°C induktiv erhitzt wird. Aufgrund der Anordnung und Ausbildung der Induktionsheizung an nur einer Stelle der Trommel und weiters aufgrund der großen Wandstärke der Trommel ist es nicht möglich, die Trommel über deren gesamten Umfang gleichmäßig zu erhitzen. Zudem ist aufgrund der hohen Wärmekapazität der Trommel eine Temperaturregelung derselben auf exakte Werte nicht möglich. Noch weniger ist es möglich, die Temperatur der Trommel über den Zeitraum des Backvorgangs zu regeln, Weiters sind die Temperaturen über die Breite der Trommel dahingehend unterschiedlich, dass sie in ihren beiden Randbereichen wesentlich geringere Temperaturen als in ihren mittleren Bereichen aufweist, wobei diese Temperaturdifferenzen bis zu 10°C betragen können. Eine Regelung der Temperatur der Trommel wird insbesondere auch dadurch erschwert, dass die durch den Backvorgang bewirkte Abfuhr der Wärme von der Zeitspanne, In welcher sich das Backgut auf der Trommel befindet, sowie von der Menge der aus dem Backgut verdampften Flüssigkeit abhängig ist.

Insgesamt ist somit diese bekannte Trommel hinsichtlich der für den Backvorgang erforderlichen Temperaturen nur in sehr weiten Grenzen steuerbar und sind weiters die Temperaturen über die Breite der Trommel sehr unterschiedlich. Dadurch entspricht die Qualität den Backvorgangs nicht den bestehenden Erfordernissen.

Ein weiterer Nachteil dieser bekannten Trommel besteht darin, dass aufgrund des großen Gewichtes derselben eine Vergrößerung von deren Durchmesser nicht möglich ist, dass aufgrund der Art der Anordnung der induktionsheizung eine Vergröberung von deren Breite nur schwer möglich ist und dass auch deren Drehgeschwindigkeit nur in engen Grenzen erhöht werden kann. Aus diesen Gründen können mit der bekannten Trommel kaum Produktionssielgerungen vorgenommen werden.

Die vorstehenden Ausführungen zusammenfassend ist somit die bekannte beheizte Trommel nur zur Erzeugung eines gebackenen Waffelteiges mit sehr begrenzten Dicken geeignet wogegen sie zur Herstellung von anderen Backprodukten nicht herangezogen werden kann, ist aufgrund der stark ungleichmäßigen Temperaturverteilung über deren Oberfläche bzw. des Sachverhaltes, dass keine exakte Temperatursteuerung möglich ist, der Backvorgang qualitativ minderwertig und ist aufgrund der konstruktiven Gestaltung der Trommel keine Vergrößerung derselben zur Steigerung der Produktion möglich.

Die US 3 901 137 offenbart eine Vorrichtung zur Herstellung von Tacos, die ein in sich geschlossenes Band umfasst, auf das eine Lage Tacos kontinuierlich aufgebracht und gebacken wird, während sie an Gas- oder Elektroheizungen auf beiden Selten des oberen Trumes des Bandes geführt wird. Der gebackene Teig verlässt das in sich geschlossene Band und Füllgut wird auf den gebackenen Teig aufgebracht. Der das Füllgut tragende gebackene Teig passiert auf ein zweites in sich geschlossenes Band, auf dem der Teig und das Füllgut in Längsrichtung gefaltet werden. Wenn das gefaltete gefüllte Teigband das zweite Band verlässt, wird es in einzelne Tacos geschnitten.

Die US 5 795 607 offenbart eine Vorrichtung zum Herstellen von Eiswaffeln, bei der Teig auf ein in sich geschlossenes Band gegeossen, mit infrarotheizungen gebacken und beim Herunternehmen von dem Band verdichtet wird.

Die US 3 187 152 offenbart ein in sich geschlossenes Band, das durch Induktionserhitzung erhitzt wird, für die Verwendung beim Backen von Kuchen.

Erfindungsgemäß wird eine Anlage zur Herstellung von gebackenen Produkten bereitgestellt, welche aus mindestens zwei Blättern aus einem gebackenen Gut und einem zwischen diesen befindlichen Nahrungsmittel bestehen, die Folgendes umfasst: eine Backvorrichtung mit einem kontinuierlich bewegten, in sich geschlossenen Förderband, das aus einem ferromagnetischen Material besteht, wie z.B. ein Stahlband, und das zwischen zwei Umlenkwalzen im Umlauf bewegbar ist, eine Einrichtung zum Aufbringen des Gutes auf das Förderband, eine Einrichtung zum Abnehmen des durch Wärme behandelten Gutes von dem in sich geschlossenen Förderband, und eine Heizeinrichtung, die entlang dem Weg des oberen Trumes des Förderbandes und zwischen den beiden Umlenkwalzen vorgesehen ist, eine Einrichtung zum Aufbringen eines Nahrungsmittels auf die Oberseite des gebackenen Guts, eine Einrichtung zum Übereinanderlegen der beiden Hälften des gebackenen Guts, eine Einrichtung zum Aufelnanderpressen der beiden Hälften und eine Einrichtung zum Verformen und zum Unterteilen zur Herstellung der einzelnen Produkte, dadurch gekennzeichnet, dass die Heizeinrichtung eine Gruppe von induktionsheizgeräten ist, und dadurch, dass wenigstens eine weitere Heizeinrichtung wenigstens einer der beiden Umlenkwalzen zugeordnet ist.

Gemäß einer bevorzugten Ausgestaltung befinden sich die Umlenkwalzen zumindest angenähert horizontal nebeneinander, so dass das Förderband in einer zumindest angenähert horizontalen Richtung beweglich ist

Ferner ist die Einrichtung zum Aufbringen des Teiges auf das Förderband vorzugsweise mit einer Kühlvorrichtung ausgebildet. Die Auftragseinrichtung für den Teig kann von einer Speisevorrichtung mit einer in seiner Höhe einstellbaren Spalt oder durch zwei gegeneinander verdrehbare Walzen, welche in ihrem gegenseitigen Abstand einstellbar sind, gebildet werden.

Nach einer Ausführungsvariante sind zwei Vorrichtungen zum Herstellen von Waffelbahnen vorgesehen, wobei einer dieser Vorrichtungen eine Einrichtung zum Aufbringen eines weiteren Nahrungsmittels auf eine erste Waffelbahn zugeordnet ist und die durch die beiden Vorrichtungen erzeugten Waffelbahnen unter Zwischenlage des weiteren Nahrungsmittels aufeinander gelegt werden sowie weiters eine Vorrichtung zum Verpressen dieser beiden Waffelbahnen vorgesehen ist.

Der Gegenstand der Erfindung ist nachstehend anhand von in der Zeichnung dargestellten Ausführungsbeispielen näher erläutert. Es zeigen:
- Fig.1: eine erste Ausführungsform einer Backvorrichtung, in Seitenansicht;
- Fig.2, Fig.2a: die Vorrichtung gemäß Fig.1, in gegenüber Fig.1 detaillierten Seitenansichten;
- Fig.3: die Vorrichtung gemäß Fig.1, im Schnitt nach der Linie III-III der Fig.2;
- Fig.4: eine erste Ausführungsform einer Einrichtung zum Auftragen eines Teiges auf das Förderband der Vorrichtung gemäß Fig.1;
- Fig.4a: eine zweite Ausführungsform einer Einrichtung zum Auftragen eines Teiges auf das Förderband der Vorrichtung gemäß Fig. 1, in Seitenansicht;
- Fig.5: eine zweite Ausführungsform einer Backvorrichtung, in schematisierter Seitenansicht;
- Fig.6, 6a bis 6d: Prinzipdarstellungen der möglichen Ausrichtungen des Förderbandes in einer Backvorrichtung;
- Fig.7: eine erfindungsgemäßen Anlage zur Erzeugung von mehrschichtigen Waffelprodukten unter Verwendung einer Backvorrichtung, in schematisierter Seitenansicht;
- Fig.7a: eine zweite Ausführungsform einer erfindungsgemäßen Anlage zur Erzeugung von mehrschichtigen Waffelprodukten, in schematischer Seitenansicht;
- Fig.8: eine Einrichtung in der Anlage nach Fig.7, welche zum Übereinanderschlagen einer Waffelbahn dient, in vier Darstellungen, und
- Fig.9: eine Einrichtung in der Anlage nach Fig.7, welche zum Herstellen von räumlich verformten Waffeln dient, in Seitenansicht.

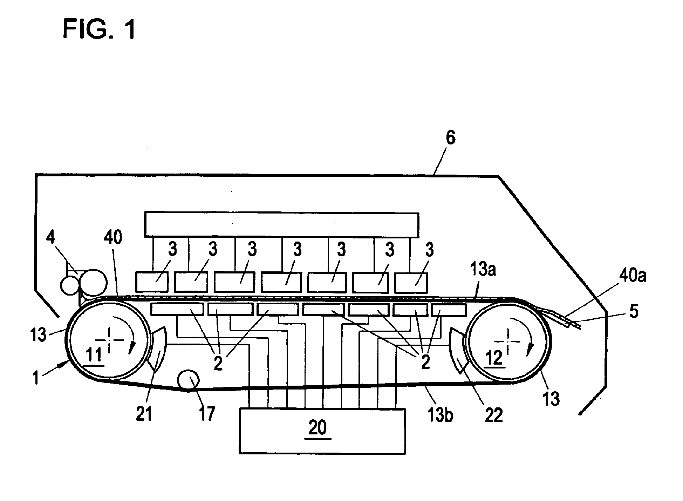

Die in Fig.1 dargestellte Vorrichtung weist eine Fördereinrichtung 1 auf, welche durch ein über zwei Umlenkwalzen 11 und 12 geführtes Förderband 13 aus einem ferromagnetischen Metallblech, insbesondere aus einem Stahlblech, gebildet ist. Unterhalb des oberen Trumes 13a des Förderbandes 13 ist ein Gruppe von Induktionsheizgeräten 2 vorgesehen, welche an eine steuerbare Speiseeinrichtung 20 angeschlossen sind. Die Induktionsheizgeräte 2 befinden sich auf derjenigen Seite des Förderbandes 13, welche derjenigen Seite, auf welche das Backgut aufgebracht wird, abgewandt ist. Oberhalb des oberen Trumes 13a des Förderbandes 13 befindet sich eine Gruppe von Infrarotheizgeräten 3, welche sich auf der Seite des Backgutes befinden.

Dem linken Ende der Fördereinrichtung 1 ist eine Auftrageinrichtung 4 zugeordnet und dem rechten Ende der Fördereinrichtung 1 ist eine Abnahmeeinrichtung 5 zugeordnet. Die gesamte Einrichtung ist von einem wärmeisolierenden Gehäuse 6 umschlossen. Den gleichfalls aus einem ferromagnetischen Metall, insbesondere aus Stahl, bestehenden Umlenkwalzen 11 und 12 sind weitere Induktionsheizgeräte 21 und 22 zugeordnet, welche gleichfalls an die Speiseeinrichtung 20 angeschlossen sind. Dem unteren Trum 13b des Förderbandes 13 ist weiters eine Führungswalze 17 zugeordnet.

Das Förderband 13, welches eine Breite von 0,3 m bis 1,5 m aufweist, wird über die Umlenkwalzen 11 und 12 mit einer Geschwindigkeit von 2 m/min bis 12 m/min im Umlauf bewegt. Durch die Induktionsheizgeräte 2 wird das obere Trum 13a des Förderbandes 13 erhitzt, wobei die Heizleistungen der einzelnen Induktionsheizgeräte 2, welche längs der Bewegungsbahn des oberen Trumes 13a des Förderbandes 13 angeordnet sind, mittels der Speiseeinrichtung 20 steuerbar sind. Mittels der Induktionsheizgeräte 21 und 22 werden zudem auch die Umlenkwalzen 11 und 12 erhitzt. Für die Temperatursteuerung sind weiters dem Förderband 13 Temperatursensoren zugeordnet.

Durch die Auftrageinrichtung 4 wird auf das obere Trum 13a des Förderbandes 13 Gut 40, welches einer Hitzebehandlung unterzogen werden soll, aufgebracht. Über den Verlauf der Förderung des Gutes 40 wird dieses von unten her dadurch erhitzt, dass das Trum 13a mittels der Induktionsheizgeräte 2 erhitzt wird. Durch die Infrarotheizgeräte 3 wird das Gut von oben her erhitzt. Im Bereich der zweiten Umlenkwalze 12 wird das der Wärmebehandlung unterzogene Gut 40a mittels der Abnahmeeinrichtung 5 vom oberen Trum 13a abgenommen.

Um Wärmeverluste weitgehend vermeiden zu können und eine genaue Wärmebehandlung des Gutes zu gewährleisten, ist die gesamte Vorrichtung vom wärmeisolierenden Gehäuse 6 umschlossen.

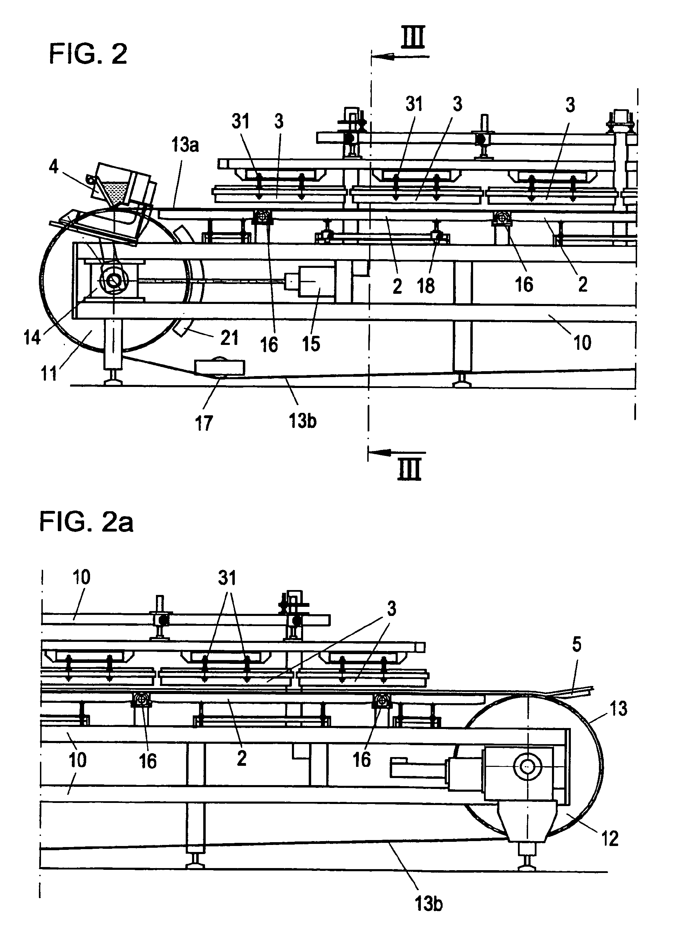

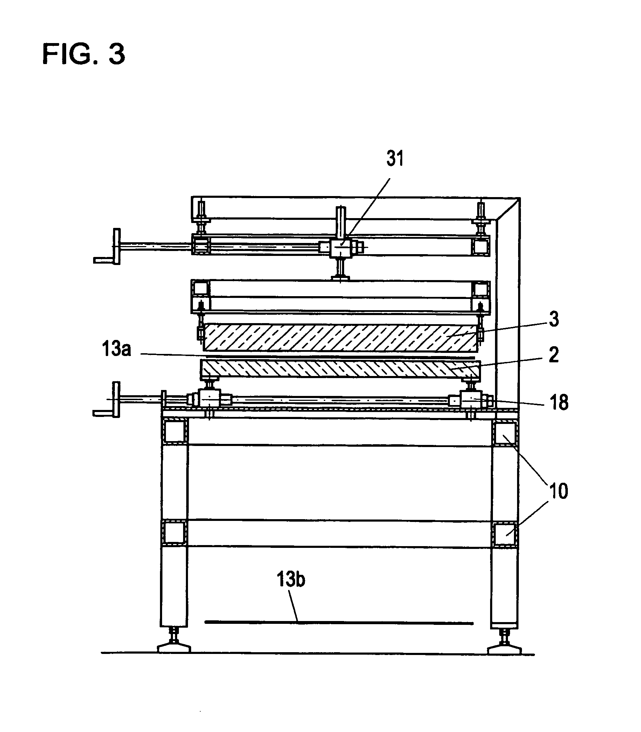

Die konstruktive Gestaltung der Vorrichtung nach Fig. 1 ist nachstehend genauer erläutert:
Wie dies aus den Fig.2 und 2a sowie Fig.3 ersichtlich ist, sind die Umlenkwalzen 11 und 12 auf einem Traggestell 10 angeordnet, an welchem die Umlenkwalze 12 unmittelbar gelagert ist, wogegen sich die Lagerung der Umlenkwalze 11 auf einem Schlitten 14 befindet, welcher mittels eines Spindeltriebes 15 verschiebbar ist. Hierdurch ist die Spannung des Förderbandes 13 einstellbar. Auf dem Traggestell 10 befinden sich weiters auch die Induktionsheizgeräte 2, welche mittels Stelleinrichtungen 18 jeweils in ihrem Abstand gegenüber dem oberen Trum 13a des Förderbandes 13 einstellbar sind. Zur Erzielung eines optimalen Wirkungsgrades muß dieser Abstand möglichst gering sein. Zwischen den einzelnen Induktionsheizgeräten 2 befinden sich weiters Stützwalzen 16 für das obere Trum 13a des Förderbandes 13. Zudem ist dem unteren Trum 13b des Förderbandes 13 die Führungseinrichtung 17 für das Förderband 13 zugeordnet. Die Infrarotheizgeräte 3 befinden sich auf vertikal verstellbaren Trageinrichtungen 31, wodurch sie gleichfalls in ihrem Abstand gegenüber dem oberen Trum 13a des Förderbandes 13 einstellbar sind.

Soferne durch die Auftrageinrichtung 4 auf das Förderband 13 ein Teig aufgebracht wird, welcher einem Backvorgang unterzogen werden soll, wird das obere Trum 13a des Förderbandes 13 im Bereich der Auftrageinrichtung auf etwa 160 °C bis 210 °C erhitzt. Durch die Induktionsheizgeräte 2, durch welches das obere Trum 13a des Förderbandes 13 auf etwa 130 °C bis 200 °C erhitzt wird, erfolgt der Backvorgang. Durch die Infra-rotheizgeräte 3 erfolgt eine Oberflächenbehandlung, insbesondere eine Bräunung, des Backgutes.

Anstelle eines Teiges können mittels dieser Vorrichtung auch beliebige andere Nahrungsmittel oder Tierfuttermittel einer Hitzebehandlung unterzogen werden.

Durch diese Vorrichtung werden gegenüber dem bekannten Stand der Technik, welcher sich auf die Herstellung von Backwaren bezieht, die folgenden maßgeblichen Vorteile erzielt:
Dadurch dass das Förderband 13 eine nur geringe Wärmekapazität aufweist und da weiters dessen Erhitzung durch mehrere über dessen Bewegungsbahn angeordnete Induktionsheizgeräte 2 erfolgt, ist eine genaue Temperatursteuerung desselben möglich, wobei zudem über die Länge der Bewegungsbahn des Förderbandes 13 hinweg eine Steuerung desselben auf unterschiedliche Temperaturen vorgenommen werden kann. Weiters kann auch eine exakte Temperatursteuerung über die Breite des Förderbandes 13 dahingehend vorgenommen werden, sodass dieses im mittleren Bereich und in den Seitenbereichen nahezu die gleichen Temperaturen aufweist. Durch diese Sachverhalte wird die Qualität in der Hitzebehandlung, insbesondere die Qualität der Backvorgänge, maßgeblich verbessert.

Soferne mittels dieser Vorrichtung Backvorgänge vorgenommen werden, können deshalb, da der Teig auf die Oberseite des Förderbandes aufgebracht wird, Backwaren mit wesentlich größeren Dicken, als dies mit bekannten Vorrichtungen der Fall war, erzeugt werden. Hierdurch werden der Einsatzbereich einer derartigen Vorrichtung und die Produktvielfalt, welche mittels einer derartigen Vorrichtung herstellbar ist, wesentlich vergrößert.
Aufgrund der konstruktiven Gestaltung einer derartigen Vorrichtung ist es weiters ohne Schwierigkeiten möglich, durch Erhöhung der Fördergeschwindigkeit sowie durch eine Vergrößerung der Breite des Förderbandes die Produktionskapazität zu vergrößern.

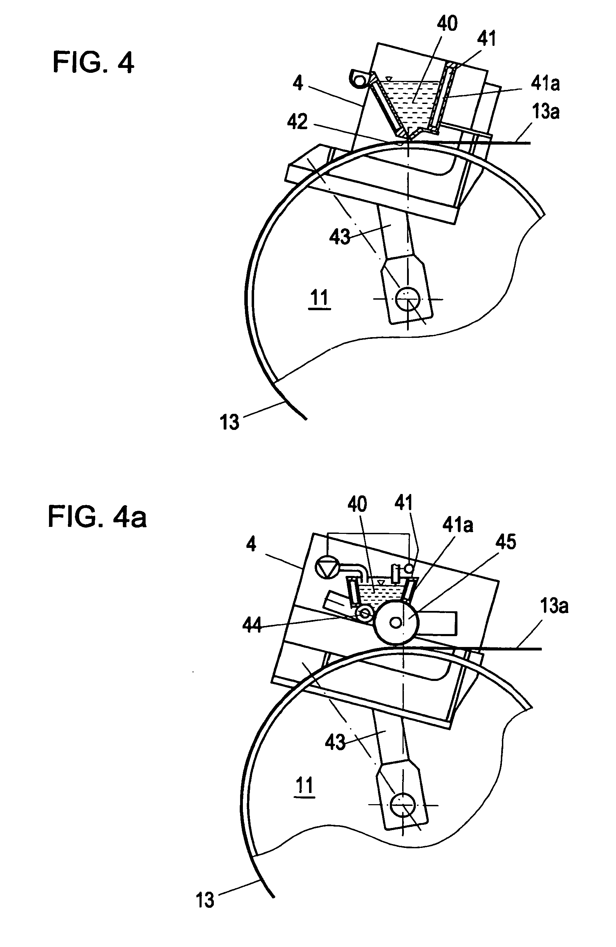

In Fig.4 ist eine erste Ausführungsform einer Auftrageinrichtung 4 dargestellt. Diese Einrichtung besteht aus einem trichterförmigen Behälter 41, welcher an seinem unteren Ende, welches sich über der Unlenkwalze 11 befindet, mit einer schlitzartigen Auftragöffnung 42 ausgebildet ist, welche sich über die gesamte Arbeitsbreite des Förderbandes 13 erstreckt. Der Behälter 41 ist an einem Tragarm 43 angeordnet, welcher um die Achse der Umlenkwalze 11 verschwenkbar ist. Durch diese Verschwenkbarkeit ist die Lage der Auftragöffnung 42 gegenüber dem Förderband 13 einstellbar. Da der Behälter 41 mit einem wassergekühlten Doppelmantel 41 a ausgebildet ist, ist das in diesem befindliche Gut 40 gegenüber der von der Umlenktrommel 11 abgestrahlten Wärme geschützt, wodurch dieses nicht beeinflußt wird. Dieses Gut 40 ist insbesondere durch eine zähflüssige Teigmasse zur Herstellung von Backwaren, insbesondere Waffeln, gebildet.

In Fig.4a ist eine alternative Ausführungsform einer Auftrageinrichtung 4 dargestellt, welche an ihrem unteren Ende mit zwei Auftragwalzen 44 und 45 ausgebildet ist, durch welche das Gut 40 auf das obere Trum 13a des Förderbandes 13 aufgetragen wird.

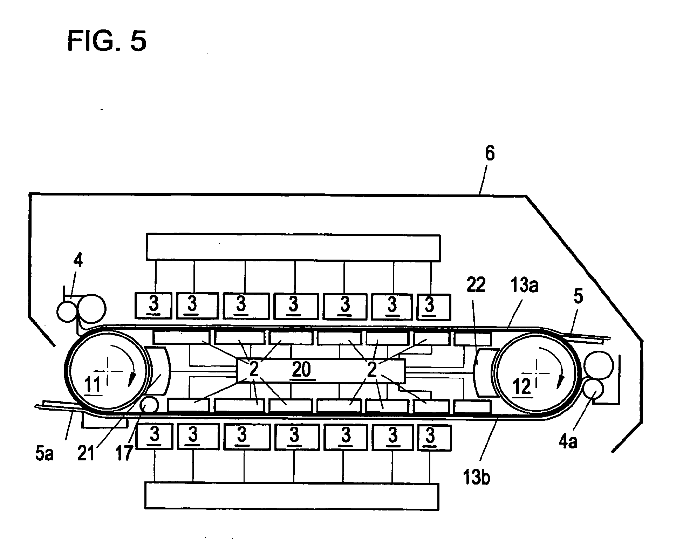

In Fig.5 ist eine gegenüber der Fig.1 dahingehend geänderte Ausführungsform einer Vorrichtung dargestellt, dass sowohl dem oberen Trum 13a als auch dem unteren Trum 13b des Förderbandes 13 Induktionsheizgeräte 2 und Infrarotheizgeräte 3 zugeordnet sind, wobei sich im Bereich der zweiten Umlenktrommel 12 eine weitere Auftrageinrichtung 4a und im Bereich der ersten Umlenktrommel 11 eine der weiteren Auftrageinrichtung 4a zugeordnete Abnahmeeinrichtung 5a befinden. Auch dabei befinden sich die Induktionsheizgeräte 2 jeweils auf der dem Backgut abgewandten Seite des Förderbandes 13.

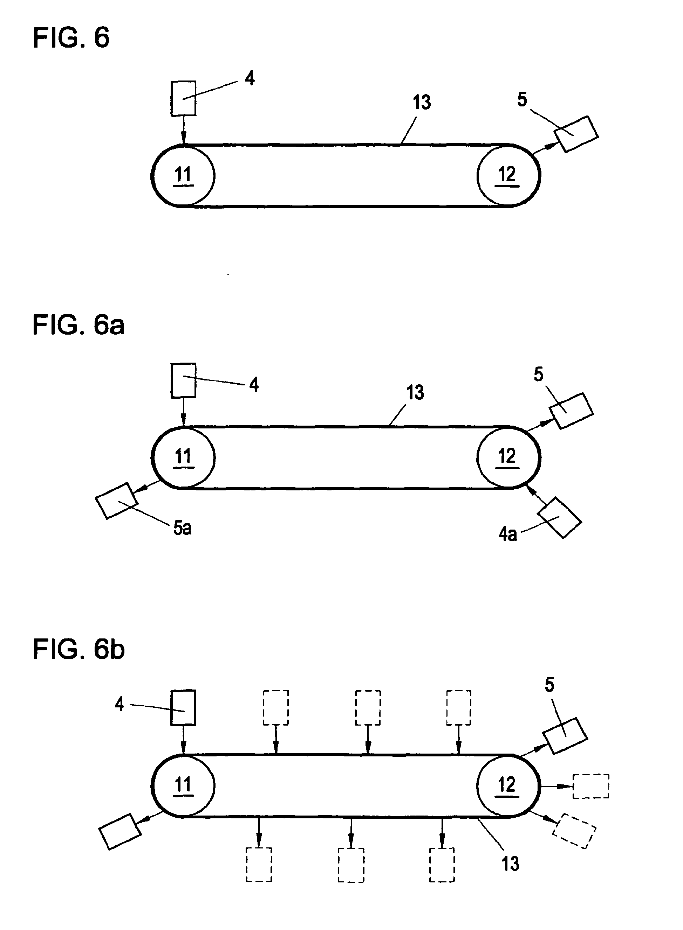

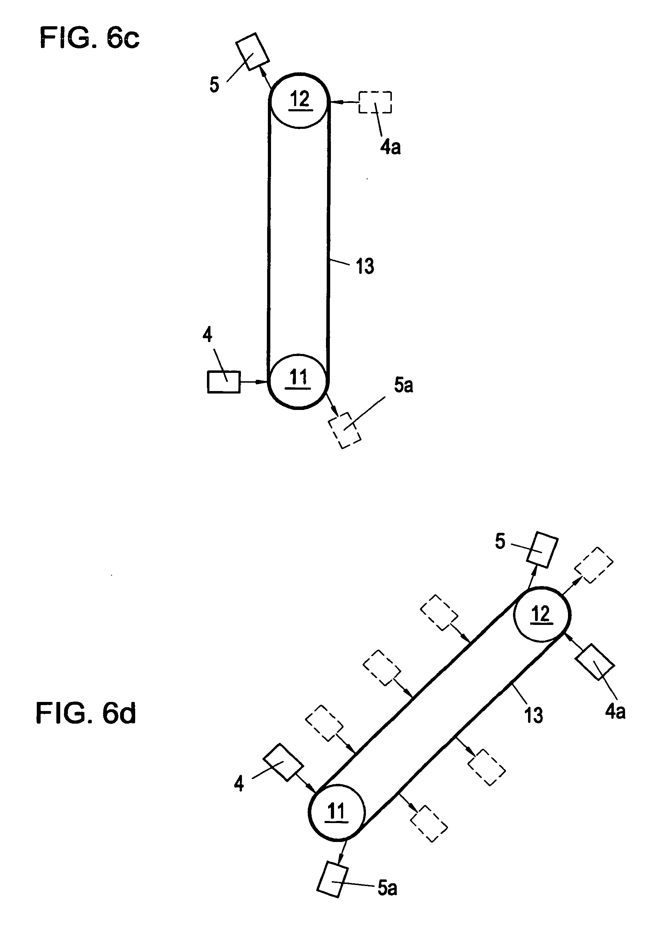

Anhand der Fig.6, 6a bis 6d ist schematisiert dargestellt, dass bei einer Vorrichtung zur Wärmebehandlung von Nahrungsmitteln hinsichtlich der Ausrichtung des Förderbandes 13 und der Zuordnung der Einrichtungen 4, 4a und 5, 5a zur Aufbringung bzw. zur Abnahme des Gutes auf das bzw. vom Förderband 13 keine Beschränkungen bestehen. So kann das Förderband 13 sowohl waagrecht und schräg als auch vertikal ausgerichtet sein. Zudem können sich die Auftrageinrichtungen 4, 4a und die Abnahmeeinrichtungen 5, 5a an beliebigen Stellen des Förderbandes 13 befinden.

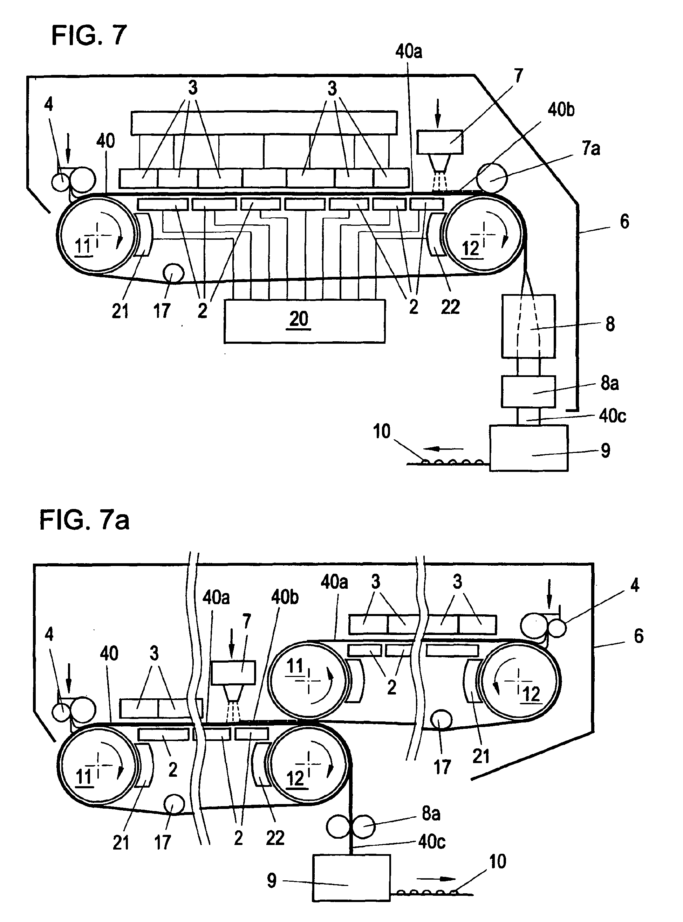

Anhand der Fig.7 ist nachstehend eine erfindungsgemäßen Anlage zur Erzeugung von Waffelprodukten unter Verwendung einer Backvorrichtung erläutert. In dieser Anlage ist der anhand der Fig. 1 beschriebenen Vorrichtung eine Einrichtung 7 zugeordnet, in welcher auf das in dieser Vorrichtung gebackenen Gut 40a, welches sich in noch heißem Zustand befindet, ein weiteres Nahrungsmittel 40b, insbesondere ein proteinhaltiges Nahrungsmittel, aufgebracht wird. Nachfolgend ist ein Walzeneinrichtung 7a vorgesehen, durch welche dieses weitere Nahrungsmittel 40b in das gebackene Gut 40a eingepreßt wird. Das gebackene Gut 40a wird in der Folge vom Förderband 13 abgenommen und wird einer Einrichtung 8 zugeführt, in welcher die beiden Hälften des gebackenen Gutes 40a übereinander geschlagen werden. Dies ist deshalb ohne Schwierigkeiten möglich, da das gebackene Gut in heißem Zustand einer Verformung zugänglich ist. Nachfolgend ist eine Einrichtung 8a vorgesehen, durch welche die beiden Hälften aufeinander gepreßt werden, wodurch eine doppelschichtige Waffelbahn 40c erzeugt wird. Hierdurch wird ein Produkt geschaffen, bei welchem sich zwischen zwei Lagen einer Backware beliebige andere Nahrungsmittel, wie Milchprodukte, insbesondere Käse, Fleischprodukte, Fischprodukte, Fruchtprodukte u. dgl., befinden. Mittels proteinhaltiger Produkte oder anderer Produkte mit klebenden Eigenschaften werden diese beiden Lagen miteinander verbunden. Nachfolgend ist eine Einrichtung 9 vorgesehen, durch welche räumlich verformte Produkte 10 hergestellt werden, welche mit weiteren Produkten gefüllt werden können.

In Fig.7a ist eine alternative Ausführungsform einer derartigen Anlage dargestellt, bei welcher zwei Vorrichtungen gemäß Fig. 1 einander zugeordnet sind, wobei durch die erste dieser Vorrichtungen ein erstes Waffelband 40a hergestellt wird, welches mit einem Nahrungsmittel 40b beschichtet wird. Auf dieses beschichtete Band wird das von der zweiten Vorrichtung erzeugte gebackene zweite Waffelband 40a aufgebracht. In der Folge wird dieses ein weiteres Nahrungsmittel enthaltende mehrschichtige Band durch eine Preßeinrichtung 8a hindurchgeführt, wodurch das Waffelband 40c erzeugt wird. Dieses gelangt in die Vorrichtung 9, in welcher räumlich verformte Produkte 10 hergestellt werden.

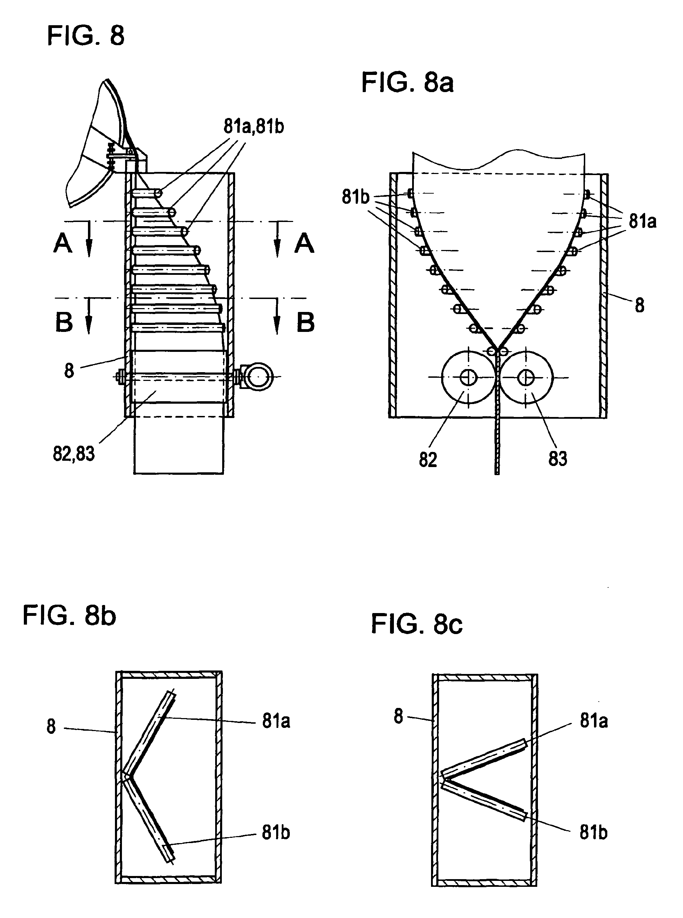

Wie dies in den Fig.8a, 8a, 8b und 8c dargestellt ist, besteht eine Einrichtung 8 zum Übereinanderschlagen von den zwei Hälften einer Bahn eines gebackenen Waffelbandes 40a aus mehreren untereinander angeordneten Paaren von Walzen 81 a und 81 b, welche in Bewegungsrichtung des Bandes 40a des gebackenen Teiges miteinander immer geringere spitze Winkel einschließen, wodurch die beiden Hälften fortschreitend zueinander geführt werden, bis sie aufeinander zur Anlage kommen. Nachfolgend sind zwei Walzen 82 und 83 vorgesehen, durch welche die beiden Hälften aufeinander gepreßt werden.

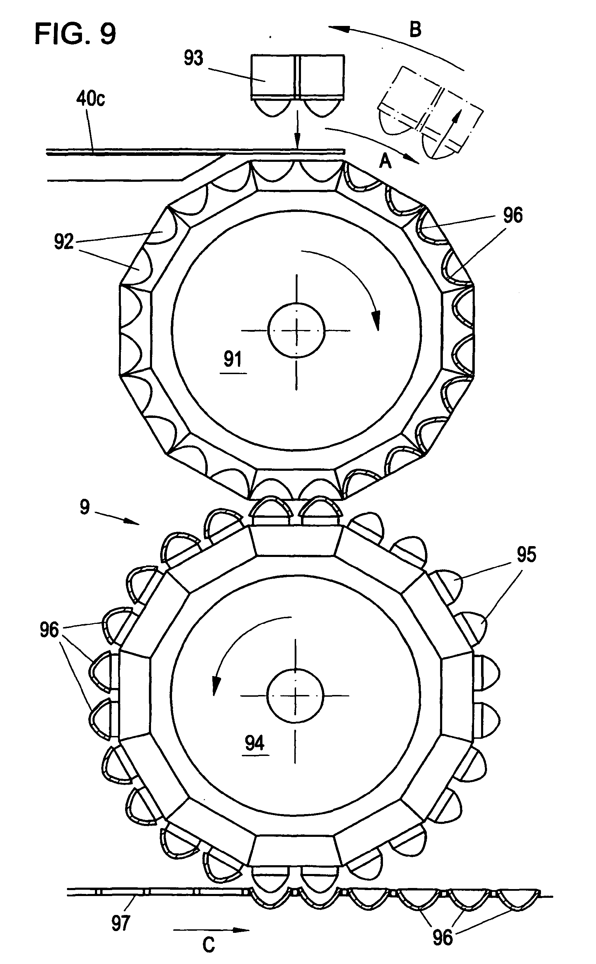

In Fig.9 ist weiters eine Einrichtung 9 dargestellt, durch welche die beiden aufeinander geschlagenen Hälften des gebackenen Teiges, zwischen welchen sich ein weiteres Nahrungsmittel befindet, zu räumlich gestalteten einzelnen Produkten verformt werden. Diese Einrichtung besteht aus zwei gegeneinander verdrehbaren Walzen 91 und 94, wobei die Walze 91 an ihrer Mantelfläche mit Hohlformen 92 und die Walze 94 an ihrer Mantelfläche mit den Hohlformen 92 gegengleich ausgebildeten Vorsprüngen 95 ausgebildet ist. Zudem ist der Walze 91 ein Stempel 93 zugeordnet.

Der Walze 91 wird die gebackene, noch heiße und daher verformbare zweischichtige Waffelbahn 40c zugeführt. Hierauf wird der Stempel 93 in die zugeordneten Hohlformen 92 hineinbewegt und mit der Walze 91 in Richtung des Pfeiles A mitbewegt. Hierdurch erfolgt die Verformung der Waffelbahn 40c zu einzelnen Hohlkörpern 96. Hierauffolgend wird der Stempel 93 in Richtung des Pfeiles B in seine Ausgangslage zurückversetzt. Bei einer weiteren Verdrehung der Walze 91 gelangen die Hohlkörper 96 in den Bereich der von der gegenläufig verdrehten Walze 94 abragenden Vorsprünge 95, von welchen sie übernommen werden. Schließlich gelangen die Hohlkörper 96 in den Bereich eines in Richtung des Pfeiles C bewegten Tragrostes 97 an den sie übergeben werden, worauf sie der weiteren Verarbeitung zugeführt werden.

Mittels einer derartigen Anlage können beliebige mehrschichtige, weitere Nahrungsmittel enthaltende Waffelprodukte zur Verwendung als Nahrungsmittel für Menschen oder für Tiere hergestellt werden.
Insbesondere können mit der erfindungsgemäßen Anlage einschichtige und mehrschichtige Waffelbahnen erzeugt werden, wobei sich zwischen den einzelnen Schichten weitere Nahrungsmittel befinden können. Durch diese weiteren Nahrungsmittel können den Waffelbahnen beliebige Geschmackseigenschaften erteilt werden. Aufgrund des hohen Zuckergehaltes des Waffelteiges, welcher mindestens 20 Gew.-% beträgt, sind die gebackenen noch heißen Gutbahnen verformbar, wodurch ihnen beliebige räumliche Gestaltungen erteilt werden können. Diese räumlichen Körper können als Behälter für weitere Nahrungsmittel dienen. So können z.B. schalenförmige Körper mit Schokolademassen gefüllt werden.

Derartige Produkte, insbesondere Waffelprodukte, können mit einer Vielzahl von geschmacklichen Eigenschaften und räumlichen Gestaltungen als Nahrungsmittel oder als Futtermittel verwendet werden.

## Patentansprüche

1. Anlage zur Herstellung von gebackenen Produkten, welche aus mindestens zwei Blättern aus einem gebackenen Gut (40a) und einem zwischen diesen befindlichen Nahrungsmittel (40b) bestehen, die Folgendes umfasst:
eine Backvorrichtung mit:
einem kontinuierlich bewegten, In sich geschlossenen Förderband (13), das aus einem ferromagnetischen Material besteht, wie z.B. ein Stahlband, und das zwischen zwei Umlenkwalzen (11, 12) im Umlauf bewegbar ist;
eine Einrichtung (4) zum Aufbringen des Gutes (40) auf das Förderband (13);
eine Einrichtung (5) zum Abnehmen des durch Wärme behandelten Gutes (40a) von dem in sich geschlossenen Förderband; und
eine Heizeinrichtung (2), die entlang dem Weg des oberen Trumes (13a) des Förderbandes (13) und zwischen den beiden Umlenkwalzen vorgesehen ist:
eine Einrichtung (7) zum Aufbringen eines Nahrungsmittels (40b) auf die Oberseite des gebackenen Guts (40a);
eine Einrichtung (8) zum Übereinanderlegen der beiden Hälften des gebackenen Guts (40a);
eine Einrichtung (8a) zum Aufeinanderpressen der beiden Hälften; und
eine Einrichtung (9) zum Verformen und zum Unterteilen zur Erstellung der einzelnen Produkte (10),
**dadurch gekennzeichnet, dass**
die Heizeinrichtung eine Gruppe von Induktionshelzgeräten (2) ist, und dadurch, dass
wenigstens eine weitere Heizeinrichtung (21, 22) wenigstens einer der beiden Umlenkwalzen (11, 12) zugeordnet ist.

2. Anlage nach Anspruch 1, wobei sich in der Backvorrichtung die Inuktionsheizgeräte (2) auf der dem Backgut (40) abgewandten Seite des Förderbandes (13) befinden.

3. Anlage nach Anspruch 1 oder 2, wobei in der Backvorrichtung die einzelnen Induktionsheizgeräte (2) in ihrem Abstand zum Förderband (13) einstellbar sind.

4. Anlage nach einem der Ansprüche 1 bis 3, wobei in der Backvorrichtung auf der anderen Seite des Förderbandes (13) weitere Heizeinrichtungen, wie z.B. Infrarothelzgeräte (3), vorgesehen sind.

5. Anlage nach einem der vorherigen Ansprüche, wobei sich in der Backvorrichtung die Umlenkwalzen (11, 12) zumindest angenähert horizontal nebeneinander befinden, so dass das Förderband (13) in einer zumindest angenähert horizontalen Richtung beweglich ist.

6. Anlage nach einem der vorherigen Ansprüche, wobei in der Backvorrichtung die Umlenkwalzen (11,12) von aus ferromagnetischern Metall, insbesondere aus Stahl, gefertigten Trommeln gebildet sind und wobei die den Umlenkwalzen (11, 12) zugeordneten Heizeinrichtungen durch Induktionsheizgeräte (21,22) gebildet sind.

7. Anlage nach Anspruch 5 oder 6, wobei in der Backvorrichtung zwischen den Umlenkwalzen (11, 12) unterhalb des oberen Trumes (13a) des Förderbandes (13) Unterstützungswalzen (16) vorgesehen sind.

8. Anlage nach einem der vorherigen Ansprüche, wobei in der Backvorrichtung eine Spanneinrichtung (14, 15) vorgesehen ist, durch welche der gegenseitige Abstand der Umlenkwalzen (11, 12) und damit die Spannung des Förderbandes (13) einstellbar sind.

9. Anlage nach einem der vorherigen Ansprüche, wobei in der Backvorrichtung das Förderband (13) und die Heizeinrichtungen (2, 3) von einem thermisch isolierenden Gehäuse (6) umgeben sind.

10. Anlage nach einem der vorherigen Ansprüche, wobei sich in der Backvorrichtung die Einrichtung (4) zum Aufbringen des Gutes (40) oberhalb der in Bewegungsrichtung des Förderbandes (13) vorderen Walze (11) befindet, wobei das Gut (40) in demjenigen Bereich auf das Förderband (13) aufgebracht wird, in welchem dieses an der Umlenkwalze (11) anliegt.

11. Anlage nach einem der vorherigen Ansprüche, wobei in der Backvorrichtung die Einrichtung (4) zum Aufbringen des Gutes (40) auf das Förderband (13) mit einer Kühlvorrichtung (41 a) ausgebildet ist.

12. Anlage nach einem der vorherigen Ansprüche, wobei in der Backvorrichtung die Einrichtung (4) zum Aufbringen des Gutes (40) durch mindestens eine Speiseeinrichtung mit einem in seiner Höhe einstellbaren Spalt (42) oder durch zwei gegeneinander verdrehbare Walzen (44,46), welche in ihrem gegenseitigen Abstand einstellbar sind, gebildet ist

13. Anlage nach einem der vorherigen Ansprüche, die Folgendes umfasst: zwei Backvorrichtungen, eine Einrichtung (7), die einer der Backvorrichtungen zum Aufbringen eines weiteren Nahrungsmittels (40b) auf eine erste Waffelbahn (40a) zugeordnet ist, eine Einrichtung zum Aufeinanderlegen von zwei von den beiden Backvorrichtungen erzeugten Waffelbahnen (40a) unter Zwischenlage des weiteren Nahrungsmittels (40b) und eine Einrichtung (8a) zum Verpressen dieser beiden Waffelbahnen.

## Claims

1. System for producing baked products which consist of at least two layers of a baked material (40a) and a foodstuff (40b) arranged therebetween, said system comprising:
a baking device with:
a continuously moving, endless conveyor belt (13) which consists of a ferromagnetic material, such as a steel strip, and can be circulated between two return rollers (11, 12);
a device (4) for depositing the material (40) on the conveyor belt (13);
a device (5) for removing the heat-treated material (40a) from the endless conveyor belt; and
a heating device (2) which is provided along the path of the upper run (13a) of the conveyor belt (13) and between the two return rollers;
a device (7) for depositing a foodstuff (40b) on the upper side of the backed material (40a);
a device (8) for arranging the two halves of the baked material (40a) one on top of the other;
a device (8a) for pressing the two halves onto one another; and
a device (9) for shaping and dividing in order to produce the individual products (10), **characterised in that**
the heating device is a group of induction heaters (2), and **in that**
at least one further heating device (21, 22) is assigned to at least one of the two return rollers (11, 12).

2. System according to claim 1, wherein in the baking device the induction heaters (2) are located on the side of the conveyor belt (13) facing away from the baked material (40).

3. System according to either claim 1 or claim 2, wherein in the baking device the distance between the individual induction heaters (2) and the conveyor belt (13) is adjustable.

4. System according to any one of claims 1 to 3, wherein in the baking device further heating devices, such as infrared heaters (3), are provided on the other side of the conveyor belt (13).

5. System according to any one of the preceding claims, wherein in the baking device the return rollers (11, 12) are located side by side at least approximately horizontally, in such a way that the conveyor belt (13) is movable in an at least approximately horizontal direction.

6. System according to any one of the preceding claims, wherein in the baking device the return rollers (11, 12) are formed by drums made of ferromagnetic metal, in particular of steel, and wherein the heating devices assigned to the return rollers (11, 12) are formed by Induction heaters (21, 22).

7. System according to either claim 5 or claim 6, wherein in the baking device support rollers (16) are provided between the return rollers (11, 12) below the upper run (13a) of the conveyor belt (13).

8. System according to any one of the preceding claims, wherein in the baking device a tensioning device (14, 15) Is provided via which the distance between the return rollers (11, 12) and therefore the tension of the conveyor belt (13) can be adjusted.

9. System according to any one of the preceding claims, wherein In the baking device the conveyor belt (13) and the heating devices (2, 3) are surrounded by a thermally insulating housing (6).

10. System according to any one of the preceding claims, wherein in the baking device the device (4) for depositing the material (40) is located above the roller (11) which is at the front in the direction of movement of the conveyor belt (13), the material (40) being deposited onto the conveyor belt (13) in the region in which said conveyor belt rests on the return roller (11).

11. System according to any one of the preceding claims, wherein In the baking device the device (4) for depositing the material (40) on the conveyor belt (13) is formed with a cooling device (41 a).

12. System according to any one of the preceding claims, wherein in the baking device the device (4) for depositing the material (40) is formed by at least one feed device comprising a height-adjustable gap (42) or by two counter-rotatable rollers (44, 45) which can be adjusted in terms of their spacing from one another.

13. System according to any one of the preceding claims which comprises: two baking devices, a device (7) which is assigned to one of the baking devices for depositing a further foodstuff (40b) onto a first wafer strip (40a), a device for arranging two wafer strips (40a) produced by the two baking devices on top of one another with the further foodstuff (40b) in the middle, and a device (8a) for pressing these two wafer strips together.

## Revendications

1. Installation pour la fabrication de produits cuits qui se composent d'au moins deux feuilles d'un matériau cuit (40a) et d'un produit alimentaire (40b) situé entre celles-ci, qui comprend les éléments suivants:
un dispositif de cuisson avec :
transporteur à bande (13) se déplaçant en continu, refermé sur lui-même, qui se compose d'un matériau ferromagnétique, comme par exemple une bande en acier, et qui est mobile en rotation entre deux rouleaux de renvoi (11,12),
un équipement (4) pour la mise en place du matériau (40) sur le transporteur à bande (13) ;
un équipement (5) pour le prélèvement du matériau (40a) traité thermiquement à partir du transporteur à bande fermé sur lui-même ; et
un équipement de chauffage (2) qui est prévu le long du trajet du brin supérieur (13a) du transporteur à bande (13) et entre les deux rouleaux de renvoi ;
un équipement (7) pour la mise en place d'un produit alimentaire (40b) sur le côté supérieur du matériau cuit (40a) ;
un équipement (8) pour mettre l'une sur l'autre les deux moitiés du matériau cuit (40a) ;
un équipement (8a) pour presser l'une contre l'autre les deux moitiés ; et
un équipement (9) de déformation et de division pour la fabrication des produits (10) individuels,
**caractérisée en ce que**
l'équipement de chauffage est un groupe d'appareils de chauffage par induction (2), et **en ce**
**qu'**au moins un autre équipement de chauffage (21, 22) est affecté au moins à un des deux rouleaux de renvoi (11, 12),

2. Installation selon la revendication 1, dans laquelle les appareils de chauffage par induction (2) dans le dispositif de cuisson se trouvent sur la côté du transporteur à bande (13) qui est éloigné du matériau (40).

3. Installation selon la revendication 1 ou 2, dans laquelle les différents appareils de chauffage par induction (2) dans le dispositif de cuisson sont réglables dans leur distance au transporteur à bande (13).

4. Installation selon l'une des revendications 1 à 3, dans laquelle d'autres équipements de chauffage, comme par exemple des appareils de chauffage par infrarouges (3), sont prévus dans le dispositif de cuisson sur l'autre côté du transporteur à bande (13).

5. Installation selon l'une des revendications précédentes, dans laquelle les rouleaux de renvoi (11, 12) dans le dispositif de cuisson sont situés l'un à côté de l'autre au moins de façon approximativement horizontale de sorte que le transporteur à bande (13) est mobile dans une direction au moins approximativement horizontale.

6. Installation selon l'une des revendications précédentes, dans laquelle les rouleaux de renvoi (11, 12) dans le dispositif de cuisson sont formés de tambours réalisés en métal ferromagnétique, en particulier en acier, et les équipements de chauffage affectés aux rouleaux de renvoi (11,12) étant formés par des appareils de chauffage par induction (21, 22).

7. Installation selon la revendication 6 ou 6, dans laquelle des rouleaux de soutien (16) sont prévus dans le dispositif de cuisson entre les rouleaux de renvoi (11, 12) au-dessous du brin supérieur (13a) du transporteur à bande (13).

8. Installation selon l'une des revendications précédentes, dans laquelle un équipement de tension (14, 15) est prévu dans le dispositif de cuisson, par lequel la distance réciproque des rouleaux de renvoi (11, 12) et donc la tension du transporteur à bande (13) peuvent être réglées.

9. Installation selon l'une des revendications précédentes, dans laquelle le transporteur à bande (13) et les équipements de chauffage (2, 3) dans le dispositif de cuisson sont entourés d'un carter (6) thermiquement isolant.

10. Installation selon l'une des revendications précédentes, dans laquelle l'équipement (4), dans le dispositif de cuisson, pour la mise en place du matériau (40) se trouve au-dessus du rouleau (11) avant dans le sens de déplacement du transporteur à bande (13), le matériau (40) étant mis en place sur le transporteur à bande (13) dans la zone dans laquelle ce dernier appuie contre le rouleau de renvoi (11).

11. Installation selon l'une des revendications précédentes, dans laquelle l'équipement (4), dans le dispositif de cuisson, pour la mise en place du matériau (40) sur le transporteur à bande (13) est constitué avec un dispositif de refroidissement (41a).

12. Installation selon l'une des revendications précédentes, dans laquelle équipement (4), dans le dispositif de cuisson, pour la mise en place du matériau (40) est formé d'au moins un équipement d'alimentation avec un interstice (42) réglable en hauteur ou de deux rouleaux (44, 45) pouvant tourner l'un vers l'autre et dont l'écartement réciproque est réglable.

13. Installation selon l'une des revendications précédentes, comprenant : deux dispositifs de cuisson, un équipement (7) qui est affecté à un des dispositifs de cuisson pour la mise en place d'un autre produit alimentaire (40b) sur une première bande gaufrée, un équipement pour mettre l'une sur l'autre deux bandes gaufrées (40a) produites par les deux dispositifs de cuisson avec interposition de l'autre produit alimentaire (40b), et un équipement (8a) pour presser ces deux bandes gaufrées.
